# NEW EUROPEAN PATENT SPECIFICATION

(11) **EP 0 169 617 B2**
(45) Date of publication and mention of the opposition decision: **07.09.1994**
(45) Mention of the grant of the patent: 19.12.1990
(21) Application number: 85201203.8
(22) Date of filing: 17.07.1985
(51) Int. Cl.: A23D 7/00, A23D 7/02, A23C 15/02

(54) **Method for preparation of fat-continuous dispersion**
Verfahren zur Herstellung von Dispersionen mit zusammenhängender lipider Phase
Méthode de préparation de dispersions avec phase lipide continue

(30) Priority: 27.07.1984 GB 8419233
(43) Date of publication of application: 29.01.1986
(73) Proprietor: UNILEVER N.V., 3013 AL Rotterdam (NL); UNILEVER PLC, London EC4P 4BQ (GB)
(72) Inventor: Hansen, Wilhelm, D-2080 Pinneberg (DE)
(74) Representative: Land, Addick Adrianus Gosling

(56) References cited:
- EP-A- 0 098 664
- EP-A-00 986 663
- DD-A- 99 087
- DE-A- 2 853 474
- FR-A- 1 135 770
- GB-A- 2 035 360
- NL-A- 8 204 010
- US-A- 4 307 125
- Food Engineering and Dairy Technology, 1981, Chapter 15, pages 410-414
- Die Milchwissenschaft, Heft 7, 1947, pages 303-309
- Kenics Bulletin n SM5A, with a copyright of 1973

## Description

The present invention relates to a method for making a fat-continuous dispersion and to the dispersions so made.

Examples of fat-continuous water-in-oil dispersions are butter and margarine each of which contains a minimum of 80 wt.% fat. In the case of butter, a variety of traditional churning methods are available for its production from dairy cream containing about 30 wt.% fat. An alternative method of butter production known as the Alfa process employs as a starting material an 80 wt.% fat cream which is inverted while all fat is in the liquid phase, and cooled and worked in a scraped surface heat exchanger. For margarines a number of methods have been proposed over the years. Nowadays, however, the method prevalent throughout the margarine industry comprises emulsifying an aqueous phase with a heated liquid fatty phase to form a water-in-oil emulsion, followed by sudden cooling and mixing, such as that provided by a scraped surface heat exchanger, to cause at least partial solidification of the fatty phase. Modifications and additions are frequently included to achieve a margarine having desired physical properties such as plasticity and hardness.

We have now discovered a method which is applicable to the preparation of butter, margarine and melanges containing at least 80 wt.% fat as well as fat-continuous dispersions, including melanges, containing less than 80 wt.% fat. By "melange" we mean a fat-continuous dispersion containing a mixture of milk fat and non-milk fat.

According to the present invention, there is provided a method for preparing a fat-continuous water-in-oil dispersion, wherein an oil-in-water emulsion containing between 40 and 70 wt.% oil, is inverted into the fat-continuous water-in-oil dispersion and an aqueous phase formed is separated, by passing at little working the oil-in-water emulsion through a static mixing unit or pressure valve at a pressure drop of between 2 and 20 bar and an attendant temperature rise of up to 10°C, such that a higher proportion of fat globules can be retained in their original state than by conventional churning processes, while 15 to 65 wt.% of the oil being in the solid phase before and after passing through the static mixing unit or pressure valve, and a fat-continuous water-in-oil dispersion based butter, margarine or melange prepared in that an oil-in-water emulsion containing between 40 and 70 wt.% oil, is inverted into the fat-continuous water-in-oil dispersion and an aqueous phase formed is separated, by passing at relatively little working the oil-in-water emulsion through a static mixing unit or pressure valve at a pressure drop of between 2 and 20 bar and an attendant temperature rise up to 10_{°}C, such that a higher proportion of fat globules can be retained in their original state than by conventional churning processes, while 15 to 65 wt.% of the oil being in the solid phase before and after passing through the static mixing unit or pressure valve.

Preferably, the oil-in-water emulsion to be inverted is a physically ripened emulsion. The amount of oil that is in the solid phase before and after passage through the static mixing unit or pressure valve preferably is 20 to 50%, more preferably 20 to 40%, calculated on the weight of the oil.

Throughout the present specification the terms "fat" and "oil" are used interchangeably.

The use of a 40 to 70 wt.% fat cream having the appropriate part of its oil content, preferably 20 to 40 wt.%, in solid form has, we found, resulted in the inversion of the emulsion on passage through the static mixing unit, pressure valve or the like. On passage through the static mixing unit, pressure valve or the like, the emulsion is suitably subjected to a pressure drop of between 2 and 20 bar and an attendant temperature rise of up to 10 ° C. preferably, the pressure drop is not more than 10 bar and the accompanying temperature rise not more than 5 _{°} C. The use of a static mixing unit, pressure valve or the like can be advantageous on two counts. It not only contains no moving parts so that it can be economic to purchase, to run in terms of energy requirements and to maintain, but it can also effect inversion of the oil-in-water emulsion whilst imparting relatively little working to the emulsion or dispersion. The state of at least some of the fat globules present in the oil-in-water emulsion need thus be little changed by passage through the static mixing unit, pressure valve or the like. This can be particularly advantageous when using a physically ripened oil-in-water emulsion. We believe that by use of the present process a higher proportion of fat globules can be retained in their original state than by conventional churning processes. As the fat globules present in the ripened emulsion are believed to improve the product consistency and to enhance the taste of the final product, their at least partial retention during processing is preferable.

Inversion of the emulsion will only occur at the appropriate stage of the process if the oil phase contains between 15 and 65 wt.%, preferably between 20 and 40 wt.% oil in the solid phase. The optimal solid phase content of the emulsion at the inversion stage depends to some extent on the emulsion temperature at which the inversion is caused to occur, relatively high solid phase contents usually being more appropriate at relatively low temperatures. In order to retain the requisite amount of oil in the solid phase, any temperature rise occurring on passage of the emulsion through the static mixing unit, pressure valve or the like should preferably be limited to 10_{°}C or less. If desirable, the static mixing unit, pressure valve or the like is tempered, e.g. thermostated, to an appropriate temperature. Suitably, the static mixing unit, pressure valve or the like is cooled, preferably by indirect cooling means to reduce problems of contamination.

The oil-in-water emulsion employed in the present process may be a natural cream obtained from cows' milk, an artificial cream containing non-milk fat or a natural cream to which additional milk fat and/or non-milk fat has been added. The natural cream may be obtained by conventional techniques, e.g. centrifuging.

To obtain an artificial cream, any suitable method may be employed, for example premixing of the ingredients followed by high pressure homogenisation.

Alternatively, a suitable artificial cream may be prepared by injecting a liquid fat phase into an aqueous phase. The fat phase is preferably injected under a pressure of at least 150 bar, more preferably at least 200 bar, but preferably not more than 350 bar. To perform the injection process, the aqueous phase at a temperature of between 20 and 50 °C, for example 28 °C, suitably flows along a pipe or the like fitted with a plurality of nozzles which are suitably distributed along the length of the pipe. The fat phase, at a temperature between 50 and 60 °C, is forced through the nozzles. Suitable injection pressures range from 200 bar to 300 bar.

The fat content of the cream, i.e. the oil-in-water emulsion selected, will depend on the desired end product. Preferably, however, the fat content will range from 50 to 65 wt.%. Fats which may be employed in an artificial cream or which may be added to a natural cream include animal and vegetable triglyceride fats and blends thereof such as those employed in margarine manufacture. Examples include fallow, fish oil, sunflower oil, safflower oil, soya bean oil, coconut oil, rapeseed oil, palm oil, palm kernel oil and mixtures thereof and any modified sample thereof, for example by fractionation, hydrogenation or interesterification.

Non-toxic materials having physical properties similar to those of triglycerides, which materials may be indigestible, e.g. waxes such as jojoba oil and hydrogenated jojoba oil, poly fatty acid esters of mono- and disaccharides, e.g. sucrose octa fatty acid ester, mixtures thereof and mixtures of such materials with triglycerides, also can be employed as fat in the oil-in-water emulsion of the present process.

In the case of an artificial cream, the aqueous phase can contain conventional additives such as proteins and the fat phase can contain conventional additives such as phospholipids, monoglycerides, flavouring and colouring agents. In the case of melanges, the proportion of milk fat to non-milk fat may vary widely and can be determined by, inter alia, desired taste of the product as well as the cost of the starting materials.

The present process suitably includes the step of physically ripening the oil-in-water emulsion. The ripening may be physical only, i.e. an aging process, or it may additionally include bacteriological ripening by the addition of an appropriate culture. During the physical ripening the solid phase develops. A conventional physical ripening scheme such as 2 hours at 10 °C, 2 hours at 21 _{°} C followed by 10 hours at 12 °C may suitably be employed. On completion of the ripening step, the cream emulsion can, if necessary, be tempered at an appropriate temperature prior to passage through the static mixing unit, pressure valve or the like.

The pressure required to pass the cream through the static mixing unit or pressure valve and subject it to the necessary pressure drop is preferably provided by a pump located immediately before the static mixing unit or pressure valve. We have found that the use of a gear pump is suitable so that insufficient shear is imparted to the oil-in-water emulsion on passage through the pump to cause phase inversion.

We have found that cooling of the static mixing unit or the like to produce a temperature between 0 and 20 °C, preferably between 10 and 16 °C, more preferably between 12 and 14 °C, in the emulsion can be appropriate. To maintain such a temperature, iced water as the cooling medium can be used. Suitably the iced water is circulated around the external surface of the static mixing unit. The actual temperature selected will depend on the cream composition. For example, where a natural cream containing only milk fat is employed, it is preferably ripened to a solids content of 20 to 25% solid fat with respect to the oil phase as measured at 12_{°}C and passed through the static mixing unit or the like cooled to a temperature of between 10 and 12 °C. In the case of a blend of non-milk fats such as that employed in margarine manufacture and having 25 wt.% of its oil in solid form at 16°C, the static mixing unit is suitably cooled to 16°C.

An example of a static mixing unit which we have found useful is a Kenics static mixer. The equipment has no moving parts. It is economic to purchase, to run and to maintain.

Passage of the emulsion through the static mixing unit or pressure valve can ensure that the inversion is induced by a minimum of physical working, resulting in preservation of at least some of the original fat globule structure present in the starting cream, which may be desirable from an organoleptic point of view.

If desired, the product exiting from the static mixing unit or pressure valve may be subjected to a variety of post-working treatments.

The state in which the product exits from the static mixing unit or pressure valve will depend, amongst other things, on the starting materials and the pressure drop exerted across the static mixing unit or pressure valve. The product preferably exits in the form of a water-in-oil emulsion in a semi-solid state together with excess aqueous phase. To yield a product having a higher fat content than that of the starting cream, the aqueous phase can be strained off, suitably by dividing the product stream into four or more strands to increase its surface area from which the aqueous phase such as buttermilk or free water can drain away. Alternatively, some or all of the aqueous phase can be kneaded into the water-in-oil dispersion to yield a dispersion having a selected fat content. The present process can thus provide a means for readily controlling the water content of fat-continuous dispersions, particularly those whose fat content is less than 80 wt.%.

Post-working of the product dispersion suitably involves pressing and working action such as that provided by the pressing/working unit of an Ahlborn Fritz machine. During the post-working treatment, the product is preferably cooled by cooling water at a temperature of between 3 and 5 _{°} C.

In the case of natural cream, the aqueous phase will constitute buttermilk and, should the fat content of the semi-solid water-in-oil phase comprise more than 80 wt.%, the water-in-oil dispersion will be butter. Use of the present method can thus have the advantage that less buttermilk, which is a product of low market value, is produced compared with a butter-making process starting from milk or a cream of lower fat content.

The present process can be operated as a continuous process in combination with a packing machine. Suitably the creams are ripened as part of a batch process prior to passage through the static mixing unit, pressure valve or the like.

Embodiments of the present process will now be described by way of example only with reference to the following examples.

Examples 1 to 5 and 8 relate to the use of all milk fat creams. Examples 6 and 9 employ creams comprising a mixture of milk fat and non-milk fat, and Example 7 relates to the use of an artificial cream containing no milk fat. The melange cream of Examples 6 and 9 and the artificial cream of Example 7 were prepared by injecting the molten non-milk fat into the water phase, employing an injection pressure of 200 to 300 bar and a temperature during injection of 40 to 60 °C. The injection nozzles had a diameter of 0.2 to 0.3 mm. In each example the creams were chosen so that, after the stated ripening, each cream had between 20 and 40 wt.% of its fat content in the solid phase.

In each of Examples 1-8, the cream was passed under the stated conditions through a static mixing unit or pressure valve in which inversion occurred. The product exiting from the static mixing unit or pressure valve was separated into an aqueous portion such as buttermilk and a semi-solid fat-continuous dispersion. To allow the aqueous portion to drain away more readily, the exiting semi-solid dispersion was divided into four or more strands. The fat-continuous dispersion was then passed through the pressing/working unit of an Ahlborn Fritz conventional continuous butter-making machine which worked the dispersion and at the same time allowed more aqueous phase to separate. Of the aqueous portion separated, 80 wt.% separated by draining, with the remaining 20 wt.% being separated by the Ahlborn Fritz machine.

The resulting fat-continuous dispersion was assessed for hardness in terms of C values using the method set out in A.J. Haighton JAOCS 36 (1959) 345.

### Example 1

A 64% natural winter cream, i.e. a cream containing 64 wt.% fat derived from cows, milk collected during the winter months, was physically ripened at 14_{°}C. Without further pretreatment, it was passed through a static mixing unit cooled to a temperature of 12_{°}C and subjected to a pressure drop of 7 bar. The resulting product was a mixture of butter and buttermilk. The buttermilk was strained off and the butter was worked. The resulting butter had good plasticity at 10 °C and good spreadability.

### Example 2

A 55% natural cream from winter milk was physically ripened by holding at 21 °C for 2 h followed by 16 h at 12°C. The ripened cream was then passed through a static mixing unit and subjected to a pressure drop of 10 bar. The static mixing unit was cooled so that the temperature of the product exiting from the unit was maintained at 12 _{°} C. The resulting product was a water-in-oil dispersion and buttermilk. The water-in-oil dispersion contained 24% aqueous phase and had good consistency and water distribution with no water exudation. Its hardness values were C₅ of 4100, C₁₀ of 2100, C₁₅ of 950 and C₂₀ of 320. The buttermilk contained only 0.8 wt.% fat.

### Example 3

A 50% to 60% cream from winter milk was physically ripened at 8 °C for 2 h, 21 °C for 2 h and 12 °C for 16 h. It was then passed through the static mixing unit and subjected to a pressure drop of 10 bar. The static mixing unit was tempered so that the temperature of the product exiting from the unit was 15 °C. The resulting buttermilk had a fat content of 0.9 wt.% and the resulting spread had a content of only 14.3 wt.%. The spread had very good water distribution with no water exudation and good consistency. Its hardness values were C₅ of 5400, C₁ of 2100, C₁ of 1000 and C₂₀ of 360.

### Example 4

A 57% cream from winter milk was physically ripened at 8 °C for 2 h, 21 _{°} C for 2 h and 12 °C for 16 h. It was then passed through a static mixing unit and subjected to a pressure drop of from 8 to 11 bar. The static mixing unit was un-cooled. The exit temperature of the emulsion was 16 °C. The resulting buttermilk had a fat content of 0.7 wt.% and the resulting spread had a water content of 15 wt.%. The spread had very good water distribution and very good consistency. Its hardness values were C₅ of 3600, C₁₀ of 1900, C₁₅ of 990 and C₂₀ of 360, Its oral melt and taste were judged comparable to conventionally churned butter.

### Example 5

A 67% cream from summer milk was physically ripened at 8 °C for 2 h, at 18 °C for 2 h and at 13 °C for 16 h. It was then passed through a static mixing unit cooled to a temperature of 12 °C and subjected to a pressure drop of 15 to 16 bar. Both buttermilk and butter were produced. The butter had a water content of 20 wt.%. The hardness values of the butter were C₅ of 3600, C₁ of 2000, C₁₅ of 600 and C₂₀ of 140.

### Example 6

A 60% cream comprising a mixture of cream from summer milk and additional fat comprising a blend of 60 wt.% of an edible tallow fraction and 40 wt.% of an interesterified mixture of 70 wt,% of an edible fallow fraction and 30 wt.% of sunflower oil was physically ripened at 8 to 12 °C for 6 h. The ripened cream was passed through a static mixing unit and subjected to a pressure drop of 10 to 12 bar. The cream entered the static mixing unit at 8 °C and the product exited at 11 °C. The resulting aqueous phase was separated from the resulting semi-solid melange spread. The aqueous phase had a fat content of 1.5 wt.% and the melange spread had a water content of 20 wt.%. The melange spread had a C₁ value of 1700, acceptable plasticity and a consistency of 7.5 to 8.0. Consistency was determined on a scale of from 1 to 10, on which good quality butter prepared by conventional method scored 8-9 and conventionally prepared margarine scored about 5 or less.

### Example 7

A 50% cream containing a fat comprising the blend of non-milk fats employed in Example 6 and an aqueous phase comprising a 50:50 mixture of skim milk and water was physically ripened at 14 to 16 °C for 16 h. It was then passed through a static mixing unit and subjected to a pressure drop of 10 bar and a temperature rise of less than 5 °C. The resulting buttermilk-type aqueous phase was separated from the resulting spread which had a water content of 25 wt.%. The spread had hardness values of C₁ of 2000, C₁₀ of 1400, C₁₅ of 750 and C₂₀ of 120.

### Example 8

A 50% cream from summer milk was physically ripened at 8 °C for 2 h, 18°C for 2 h and 13 °C for 16 h. It was then passed through a pressure valve and subjected to a pressure drop of 10 bar and a temperature rise of less than 5 °C. The resulting buttermilk and spread were separated. The spread had a water content of 22 wt.% and hardness values of C₅ of 4700, C₁₀ of 1800, C₁₅ of 620 and C₂₀ of 130.

### Example 9

A 60% cream comprising a mixture of cream from summer milk and additional fat, which cream contained 30% milk fat and 30% of a low-melting fraction of an edible tallow fat, calculated on the weight of the cream, was physically ripened at 8 to 12°C for 6 h. The ripened cream was passed through a static mixing unit and subjected to a pressure drop of 10 to 12 bar. The cream entered the static mixing unit at 8 °C and the product exited at about 11-12°C. The resulting mixture of the semi-solid, inverted water-in-oil dispersion and the excess aqueous phase was pumped through another static mixing unit, in which the excess aqueous phase was kneaded into the water-in-oil dispersion. The pressure drop across this second static mixing unit was 2 bar. The dispersion left the mixing unit at 14 °C. It was filled into tubs.

A proper oil-continuous spread having a fat content of 60 wt.% was obtained. Its hardness values were C₅ of 2100, C_{10, of 1400,} C₁₅ of ₆₀₀ and C₂₀ of 150.

## Claims

1. Method for preparing a fat-continuous water-in-oil dispersion, wherein an oil-in-water emulsion containing between 40 and 70 wt.% oil, is inverted into the fat-continuous water-in-oil dispersion and an aqueous phase formed is separated, by passing at little working the oil-in-water emulsion through a static mixing unit or pressure valve at a pressure drop of between 2 and 20 bar and an attendant temperature rise of up to 10°C, such that a higher proportion of fat globules can be retained in their original state than by conventional churning processes, while 15 to 65 wt.% of the oil being in the solid phase before and after passing through the static mixing unit or pressure valve.

2. Method according to claim 1, wherein 20 to 50 wt.% of the oil is in the solid phase before and after passage through the static mixing unit or pressure valve.

3. Method according to claim 2, wherein 20 to 40 wt.% of the oil is in the solid phase before and after passage through the static mixing unit or pressure valve.

4. Method according to any one of claims 1 to 3, wherein the oil-in-water emulsion is a physically ripened emulsion.

5. Method according to claim 4, including preparing the said oil-in-water emulsion by physically ripening an oil-in-water emulsion containing between 40 and 70 wt.% oil until 20 to 40 wt.% of the oil is in the solid phase.

6. Method according to any one of claims 1 to 5, wherein the static mixing unit is tempered.

7. Method according to any one of claims 1 to 6, wherein the oil-in-water emulsion contains between 50 and 65 wt.% oil.

8. Method according to any one of the preceding claims, wherein the oil-in-water emulsion comprises a natural cream, an artificial cream or a natural cream with added fat.

9. Method according to claim 8, comprising forming an artificial cream by injecting a molten fat phase into an aqueous phase.

10. Method according to any one of the preceding claims, wherein the emulsion is ripened bacteriologically.

11. Method according to any one of the preceding claims, wherein the said emulsion is subjected to a pressure drop of between 2 and 20 bar and an attendant temperature rise of not more than 10_{°}C on passage through the static mixing unit or pressure valve.

12. Method according to any one of the preceding claims, including separating the fat-continuous dispersion produced on passage of the oil-in-water emulsion through the static mixing unit or pressure valve from any aqueous phase produced.

13. Method according to claim 12, including working the water-in-oil dispersion.

14. Method according to any one of the preceding claims, including blending the produced fat-continuous dispersion with at least a portion of any aqueous phase produced on passage of the oil-in-water emulsion through the static mixing unit or pressure valve.

15. Fat-continuous water-in-oil dispersion based butter, margarine or melange prepared in that an oil-in-water emulsion containing between 40 and 70 wt.% oil, is inverted into the fat-continuous water-in-oil dispersion and an aqueous phase formed is separated, by passing at relatively little working the oil-in-water emulsion through a static mixing unit or pressure valve at a pressure drop of between 2 and 20 bar and an attendant temperature rise up to 10°C, such that a higher proportion of fat globules can be retained in their original state than by conventional churning processes, while 15 to 65 wt.% of the oil being in the solid phase before and after passing through the static mixing unit or pressure valve.

## Patentansprüche

1. Verfahren zur Herstellung einer Wasser-in-ÖI-Dispersion mit zusammenhängender lipider Phase, wobei eine zwischen 40 und 70 Gew.- % Öl enthaltende Öl-in-Wasser-Emulsion in die Wasser-in-ÖI-Dispersion mit zusammenhängender lipider Phase invertiert wird und eine gebildetete wäßrige Phase abgetrennt wird, indem bei geringem Arbeiten die ÖI-in-Wasser-Emulsion durch eine statische Misch-Unit oder ein Druckventil bei einem Druckabfall zwischen 2 und 20 bar und einem begleitenden Temperaturanstieg von bis zu 10 °C geleitet wird, so daß ein höherer Anteil an Fettglobuli in ihrem ursprünglichen Zustand gehalten werden kann als durch übliche Butterverfahren, wobei sich 15 bis 65 Gew.-% des Öls vor und nach dem Durchgang durch die statische Misch-Unit oder das Druckventil in der festen Phase befinden.

2. Verfahren nach Anspruch 1, worin sich 20 bis 50 Gew.-% des Öles vor und noch dem Durchgang durch die statische Misch-Unit oder das Druckventil in der festen Phase befinden.

3. Verfahren nach Anspruch 2, worin sich 20 bis 40 Gew.-% des Öles vor und nach dem Durchgang durch die statische Misch-Unit oder das Druckventil in der festen Phase befinden.

4. Verfahren nach irgendeinem der Ansprüche 1 bis 3, worin die Öl-in-Wasser-Emulsion eine physikalisch gereifte Emulsion ist.

5. Verfahren nach Anspruch 4, das die Herstellung der Öl-in-Wasser-Emulsion durch physikalisches Reifen einer Öl-in-Wasser-Emulsion, die zwischen 40 und 70 Gew.-% Öl enthält, umfaßt, bis sich 20 bis 40 Gew.-% des Öles in der festen Phase befinden.

6. Verfahren nach irgendeinem der Ansprüche 1 bis 5, worin die statische Misch-Unit temperiert wird.

7. Verfahren nach irgendeinem der Ansprüche 1 bis 6, worin die Öl-in-Wasser-Emulsion zwischen 50 und 65 Gew.-% Öl enthält.

8. Verfahren nach irgendeinem der vorhergehenden Ansprüche, worin die ÖI-in-Wasser-Emulsion eine natürliche Sahne, eine künstliche Sahne oder eine natürliche Sahne mit zugefügtem Fett umfaßt.

9. Verfahren nach Anspruch 8, das die Bildung einer künstlichen Sahne durch Einspritzen einer geschmolzenen Fettphase in eine wäßrige Phase umfaßt.

10. Verfahren nach irgendeinem der vorhergehenden Ansprüche, worin die Emulsion bakteriologisch gereift wird.

11. Verfahren nach irgendeinem der vorhergehenden Ansprüche, worin die Emulsion einem Druckabfall zwischen 2 und 20 bar und einem begleitenden Temperaturanstieg von nicht mehr als 10_{°}C beim Durchgang durch die statische Misch-Unit oder das Druckventil unterworfen wird.

12. Verfahren nach irgendeinem der vorhergehenden Ansprüche, das die Abtrennung der Dispersion mit zusammenhängender lipider Phase, hergestellt mittels Durchgang der Öl-in-Wasser-Emulsion durch die statische Misch-Unit oder das Druckventil, von jeglicher gebildeter wäßriger Phase umfaßt.

13. Verfahren nach Anspruch 12, das die Bearbeitung der ÖI-in-Wasser-Dispersion umfaßt.

14. Verfahren nach irgendeinem der vorhergehenden Ansprüche, das das Vermischen der gebildeten Dispersion mit zusammenhängender lipider Phase mit mindestens einem Teil der wäßrigen Phase umfaßt, die beim Durchgang der Öl-in-Wasser-Emulsion durch die statische Misch-Unit oder das Druckventil gebildet wird.

15. Wasser-in-ÖI-Dispersion mit zusammenhängender lipider Phase basierend auf Butter, Margarine oder Melange, hergestellt dadurch, daß eine 40 bis 70 Gew.-% Öl enthaltende Öl-in-Wasser-Emulsion in die Wasser-in-ÖI-Dispersion mit zusammenhängender lipider Phase invertiert wird und eine gebildetete wäßrige Phase abgetrennt wird, indem bei geringem Arbeiten die Öl-in-Wasser-Emulsion durch eine statische Misch-Unit oder ein Druckventil bei einem Druckabfall zwischen 2 und 20 bar und einem begleitenden Temperaturanstieg von bis zu 10_{°}C geleitet wird, so daß ein höherer Anteil an Fettglobuli in ihrem ursprünglichen Zustand gehalten werden kann als durch übliche Butterverfahren, wobei sich 15 bis 65 Gew.-% des Öls vor und nach dem Durchgang durch die statische Misch-Unit oder das Druckventil in der festen Phase befinden.

## Revendications

1. Procédé de préparation d'une dispersion eau-dans-huile à phase grasse continue, dans lequel on inverse l'émulsion huile-dans-eau contenant de 40 à 70% en poids d'huile, en une dispersion eau-dans-huile à phase grasse continue et on sépare une phase aqueuse formée en faisant passer avec peu de travail l'émulsion huile-dans-eau à travers une unité statique de mélange ou une soupape de pression avec une chute de pression comprise entre 2 et 20 bars et une montée correspondante de la température jusqu'à 10 °C, de façon à pouvoir retenir une proportion de globules de graisse dans leur état initial plus grande que par des procédés classiques de barattage, tandis que 15 à 65% en poids d'huile sont en phase solide avant et après passage par l'unité statique de mélange ou la soupape de pression.

2. Procédé selon la revendication 1, dans lequel 20 à 50% en poids d'huile sont en phase solide avant et après le passage par l'appareil statique de mélange ou la soupape de pression.

3. Procédé selon la revendication 2, dans lequel 20 à 40% en poids d'huile sont en phase solide avant et après le passage à travers l'appareil statique de mélange ou la soupape de pression.

4. Procédé selon l'une quelconque des revendications 1 à 3, dans lequel l'émulsion huile-dans-eau est une émulsion physiquement mûrie.

5. Procédé selon la revendication 4, qui consiste à préparer ladite émulsion huile-dans-eau par mûrissement physique d'une émulsion huile-dans-eau contenant de 40 à 70% en poids d'huile jusqu'à ce que 20 à 40% en poids d' huile soient en phase solide.

6. Procédé selon l'une quelconque des revendications 1 à 5, dans lequel on refroidit l'appareil statique de mélange.

7. Procédé selon l'une quelconque des revendications 1 à 6, dans lequel l'émulsion huile-dans-eau contient de 50 à 65% en poids d'huile.

8. Procédé selon l'une quelconque des revendications précédentes, dans lequel l'émulsion huile-dans-eau comprend une crème naturelle, une crème artificielle ou une crème naturelle avec addition de graisse.

9. Procédé selon la revendication 8, qui consiste à former une crème artificielle en injectant une phase grasse fondue dans une phase aqueuse.

10. Procédé selon l'une quelconque des revendications précédentes, dans lequel on fait mûrir l'émulsion bactériologiquement.

11. Procédé selon l'une quelconque des revendications précédentes, dans lequel on soumet ladite émulsion à une chute de pression comprise entre 2 et 20 bars et une montée correspondante de température ne dépassant pas 10 _{°} C au passage à travers l'appareil statique de mélange ou la soupape de pression.

12. Procédé selon l'une quelconque des revendications précédentes, qui consiste à séparer la dispersion à phase grasse continue produite lors du passage de l'émulsion huile-dans-eau à travers l'appareil statique de mélange ou une soupape de pression d une quelconque phase aqueuse produite.

13. Procédé selon la revendication 12, comportant un travail de la dispersion eau-dans-huile.

14. Procédé selon l'une quelconque des revendications précédentes, qui consiste à mélanger la dispersion à phase grasse continue ainsi obtenue avec au moins une portion d'une phase aqueuse quelconque produite lors du passage de l'émulsion huile-dans-eau à travers l'unité statique de mélange ou la soupape de pression.

15. Beurre, margarine ou mélange à base d'une dispersion eau-dans-huile à phase grasse continue préparé de Façon qu'une émulsion huile-dans-eau contenant de 40 à 70% en poids soit inversée en une dispersion eau-dans-huile à phase grasse continue et que la phase aqueuse formée soit séparée par passage avec relativement peu de travail de l'émulsion huile-dans-eau à travers une unité statique de mélange ou une soupape de pression avec une chute de pression de 2 à 20 bars et une montée correspondante de la température jusqu'à 10 _{°} C, de sorte que la proportion de globules de graisse pouvant être retenue à 1' état initial est plus grande que celle obtenue par les procédés classiques de barattage, tandis que 15 à 65% en poids de l'huile sont en phase solide avant et après passage à travers l'unité statique de mélange ou la soupape de pression.
